# EUROPÄISCHE PATENTANMELDUNG

(11) **EP 1 630 369 A2**
(43) Veröffentlichungstag der Anmeldung: **01.03.2006**
(21) Anmeldenummer: 05018325.0
(22) Anmeldetag: 24.08.2005
(51) Int. Cl.: F01N 3/20, F01N 3/02, F01N 3/029

(54) **Verfahren zum Betreiben einer Abgasreinigungseinrichtung einer Brennkraftmaschine insbesondere eines Kraftfahrzeugs**

(30) Priorität: 26.08.2004 DE 102004041261
(71) Anmelder: DaimlerChrysler AG, 70567 Stuttgart (DE); PUReM Abgassysteme GmbH & Co. KG, 59423 Unna (DE)
(72) Erfinder: Braun, Tillmann, 73663 Berglen (DE); Günther, Tobias, Belleville, Michigan 48111-0000 (US); Hüthwohl, Georg, Dr., 59494 Soest (DE); Scharr, Detlef, 71397 Leutenbach (DE)

(57) **Zusammenfassung**

Die Erfindung betrifft ein Verfahren zum Betreiben einer Abgasreinigungseinrichtung (A) einer Brennkraftmaschine (1) insbesondere eines Kraftfahrzeugs.

Die Abgasreinigungseinrichtung (A) umfasst einen in einer Abgasleitung (3) der Brennkraftmaschine (1) angeordneten Partikelfilter (5) und einen dem Partikelfilter (5) nachgeschalteten Abgaskatalysator (6), wobei vorgesehen ist, bei Bedarf eine Regeneration des Partikelfilters (5) durch Rußabbrand durchzuführen. Ferner ist vorgesehen, eine Abgastemperatur zwischen dem Partikelfilter (5) und dem Abgaskatalysator (6) zu ermitteln und ein kühlendes Fluids in die Abgasleitung (3) zuzugeben, wenn die Abgastemperatur zwischen dem Partikelfilter (5) und dem Abgaskatalysator (6) eine insbesondere erste vorgebbare Grenztemperatur und/oder eine vorgebbare maximale Anstiegsgeschwindigkeit überschreitet.

Das Verfahren ist insbesondere für Kraftfahrzeuge anwendbar.

## Beschreibung

Die Erfindung betrifft ein Verfahren zum Betreiben einer Abgasreinigungseinrichtung einer Brennkraftmaschine insbesondere eines Kraftfahrzeugs mit einem in einer Abgasleitung der Brennkraftmaschine angeordneten Partikelfilter, für den von Zeit zu Zeit Regenerationsvorgänge mit einem thermischen Rußabbrand vorgesehen sind und einem dem Partikelfilter nachgeschalteten Abgaskatalysator.

Es ist bereits aus verschiedenen Veröffentlichungen bekannt, durch Zugabe von Sekundärluft zum Abgas die Temperatur eines Abgaskatalysators zu beeinflussen.

So ist es aus der DE 102 28 660 A1 bekannt, zur Verminderung der Temperatur des einem SCR-Katalysator zugeführten Abgases eine Zugabemöglichkeit von vorzugsweise relativ kühler zusätzlicher Luft stromauf des Katalysators in den Abgasstrang vorzusehen. Auf diese Weise wird eine Abkühlung des Katalysators erreicht und dessen Aufnahmefähigkeit an Reduktionsmittel erhöht, wodurch einem Reduktionsmittelschlupf entgegengewirkt wird.

Aus der DE 196 53 958 A1 ist es bekannt, eine Kühlung des Abgases durch Eindüsen von kalter Umgebungsluft in den Abgasstrom zwischen Motor und einem Denox-Katalysator vorzunehmen. Dadurch wird einem Anstieg der Katalysatortemperatur über die Temperatur seines maximalen Umsatzes hinaus entgegengewirkt.

Aufgabe der Erfindung ist es demgegenüber, ein Verfahren zum Betreiben einer Abgasreinigungseinrichtung mit einem Partikelfilter und einem dem Partikelfilter nachgeschalteten Abgaskatalysator anzugeben, welches thermische Rußabbrandvorgänge unter Vermeidung einer übermäßigen Aufheizung des Abgaskatalysators bzw. des Partikelfilters ermöglicht.

Diese Aufgabe wird durch ein Verfahren mit den Merkmalen des Anspruchs 1 gelöst.

Bei dem Verfahren wird bei der Durchführung einer Regeneration des Partikelfilters durch Rußabbrand eine Abgastemperatur zwischen dem Partikelfilter und dem Abgaskatalysator ermittelt und dem Abgas ein kühlendes Fluid zugegeben, wenn die Abgastemperatur zwischen dem Partikelfilter und dem Abgaskatalysator eine insbesondere erste vorgebbare Grenztemperatur und/oder eine vorgebbare maximale Anstiegsgeschwindigkeit überschreitet. Der Partikelfilterregeneration vorgeschaltet ist zweckmäßig eine Ermittlung des Bedarfs für eine solche und gegebenenfalls die Anhebung der Temperatur des in den Partikelfilter einströmenden Abgases. Der Wert der ersten Grenztemperatur ist vorzugsweise in bezug auf eine Schädigungstemperatur des Abgaskatalysators oder des Partikelfilters definiert. Unter einer Zugabe von kühlendem Fluid wird in diesem Zusammenhang eine zu Kühlungszwecken zugegebene Fluidmenge verstanden, die über die gegebenenfalls ohnehin zu Abgasreinigungszwecken zugegebene Menge des entsprechenden Fluids hinausgeht.

Die Regenerationsvorgänge durch thermischen Rußabbrand erfordern eine Erhöhung der Abgastemperatur auf Temperaturen von typischerweise etwa 600 °C. Insbesondere bei einer weiteren Steigerung der Abgastemperatur in dem oder hinter dem Partikelfilter, beispielsweise durch Verbrennung der im Partikelfilter angesammelten Rußpartikel, besteht jedoch die Gefahr einer thermischen Schädigung des Partikelfilters oder des dem Partikelfilter nachgeschalteten Abgaskatalysators. Durch die erfindungsgemäßen Maßnahmen werden solche Schädigungen durch Überhitzung vermieden.

Der Abgaskatalysator ist vorzugsweise als SCR-Katalysator ausgebildet, der zur katalytischen Umsetzung von Stickoxiden mit einem selektiven Reduktionsmittel geeignet ist. Als Reduktionsmittel kommt hauptsächlich ein flüssiges, reduzierend wirkendes Medium wie beispielsweise ein Kohlenwasserstoff oder eine Harnstoff-Wasserlösung in Betracht. Der Partikelfilter kann sowohl katalytisch beschichtet als auch unbeschichtet ausgeführt sein. Bevorzugt wird ein oxidationskatalytisch beschichtetes Wall-Flow-Filter oder ein Sintermetallfilter eingesetzt. Die Abgasreinigungseinrichtung kann eines oder mehrere weitere Reinigungselemente umfassen, welche zur weiteren Abgasreinigung geeignet sind. Beispielsweise ist es vorteilhaft, wenn stromauf des Partikelfilters und/oder stromab des Abgaskatalysators ein Oxidationskatalysator in der Abgasleitung angeordnet ist.

In Ausgestaltung des Verfahrens erfolgt die Zugabe des kühlenden Fluids in die Abgasleitung eingangsseitig des Partikelfilters und/oder zwischen dem Partikelfilter und dem Abgaskatalysator. Durch die Zugabe des kühlenden Fluids in die Abgasleitung zwischen dem Partikelfilter und dem Abgaskatalysator wird die Eintrittstemperatur des in den Abgaskatalysator einströmenden Abgases abgesenkt. Dadurch wird eine Schädigung des Abgaskatalysators durch Überhitzung vermieden. Vorteilhaft ist es in diesem Zusammenhang, wenn die Zugabemenge des kühlenden Fluids so eingestellt wird, dass ein vorgebbarer Schwellenwert für die Temperatur des in den Abgaskatalysator eintretenden Abgases nicht überschritten wird. In gleicher Weise kann die Abgastemperatur durch Zugabe des kühlenden Fluids in die Abgasleitung eingangsseitig des Partikelfilters abgesenkt werden. Die Zufuhr des kühlenden Fluids eingangsseitig des Partikelfilters hat zudem den Vorteil, die Rußabbrandgeschwindigkeit bei der Partikelfilterregeneration abzusenken. Dadurch können auch Schädigungen des Partikelfilters infolge eines zu rasch ablaufenden Rußabbrands vermieden werden. Die Zugabe des kühlenden Fluids erfolgt in diesem Fall vorzugsweise dann, wenn ein vorgebbarer Schwellenwert für die Temperatur des aus dem Partikelfilter austretenden Abgases erreicht oder überschritten wird. Das Überschreiten einer zulässigen Anstiegsgeschwindigkeit der Partikelfilteraustrittstemperatur kann jedoch generell ebenfalls als Auslösekriterium zur Zugabe des kühlenden Fluids dienen.

In weiterer Ausgestaltung des Verfahrens wird die Zugabemenge des kühlenden Fluids wenigstens in Abhängigkeit von der Abgastemperatur zwischen dem Partikelfilter und dem Abgaskatalysator eingestellt. Neben der Abgastemperatur zwischen dem Partikelfilter und dem Abgaskatalysator können weitere Parameter herangezogen werden, welche die Zugabemenge des kühlenden Fluids beeinflussen. Beispielsweise kann insbesondere bei einer Zufuhr des kühlenden Fluids eingangsseitig des Partikelfilters die Anstiegsgeschwindigkeit der Partikelfilteraustrittstemperatur als maßgebende Größe für die Fluidzugabemenge herangezogen werden. Vorteilhaft ist es, wenn die Zugabemenge so eingestellt wird, dass sich eine vorgegebene Abgaseintrittstemperatur am Abgaskatalysator ergibt. Insbesondere ist es vorteilhaft, die Fluidzugabemenge geregelt vorzunehmen, wobei die Abgaseintrittstemperatur dann auf eine Solltemperatur eingeregelt wird. Die Abgaseintrittstemperatur des Abgaskatalysators kann als Regelgröße dienen. Es kann jedoch auch eine kennfeldgesteuerte Einstellung der Fluidzugabemenge vorgesehen sein. Besonders vorteilhaft ist es, wenn eine Solltemperatur für die Abgaseintrittstemperatur vorgegeben wird und gleichzeitig die Austrittstemperatur des Abgases aus dem Partikelfilter und der Abgasmassenstrom ermittelt werden. Es lässt sich daraus zur Erzielung der Solltemperatur eine Sollmenge für die Fluidzugabe ermitteln, welche gezielt eingestellt wird.

In weiterer Ausgestaltung des Verfahrens wird als kühlendes Fluid Sekundärluft und/oder eine Flüssigkeit, vorzugsweise ein flüssiges Reduktionsmittel zugegeben. Da bei einem als SCR-Katalysator ausgebildeten Abgaskatalysator vorzugsweise Harnstoff-Wasserlösung als flüssiges Reduktionsmittel ohnehin zur Verfügung steht, kann diese in vorteilhafter Weise zur Kühlung des Abgases eingesetzt werden. Bei einer thermischen Partikelfilterregeneration kann vorgesehen sein, zur Absenkung der Abgaseintrittstemperatur in den Abgaskatalysator oder zur Absenkung der Partikelfiltertemperatur gleichzeitig oder alternativ Sekundärluft und Reduktionsmittel dem Abgas zuzugeben.

In weiterer Ausgestaltung des Verfahrens erfolgt die Zugabe von Flüssigkeit, wenn die Abgastemperatur zwischen dem Partikelfilter und dem Abgaskatalysator die erste vorgebbare Grenztemperatur überschreitet und die Sekundärluftzugabe wird zugeschaltet, wenn die Abgastemperatur eine im Vergleich zur ersten Grenztemperatur höhere vorgebbare zweite Grenztemperatur überschreitet. Insbesondere aus Emissionsgründen ist diese Vorgehensweise vorteilhaft, da bei Zugabe von Harnstoff-Wasserlösung als flüssiges Reduktionsmittel durch die Abgasreinigungsfunktion des Abgaskatalysators in jedem Fall aufrechterhalten bleibt. Erst wenn trotz Zugabe einer vorgegebenen Grenzmenge an Reduktionsmittel die Eintrittstemperatur des Abgases in den Abgaskatalysator nicht mehr ausreichend niedrig gehalten werden kann, wird zur zusätzlichen Maßnahme der Sekundärluftzugabe gegriffen.

In einer weiteren Ausgestaltung des Verfahrens erfolgt die Zugabe von Sekundärluft, wenn die Abgastemperatur zwischen dem Partikelfilter und dem Abgaskatalysator die erste vorgebbare Grenztemperatur überschreitet und die Flüssigkeitszugabe wird zugeschaltet, wenn die Abgastemperatur eine im Vergleich zur ersten Grenztemperatur höhere vorgebbare zweite Grenztemperatur überschreitet. Insbesondere bei Verwendung von wässriger Harnstofflösung als Reduktionsmittel kann bei einem stark erhitzten Abgaskatalysator eine unerwünschte Umsetzung zu Stickoxid erfolgen. Es ist insbesondere in diesem Fall daher vorteilhaft, wenn eine Abgastemperaturabsenkung zunächst nur mittels Sekundärluftzugabe erfolgt. Erst wenn trotz Zugabe einer vorgegebenen Grenzluftmenge die Abgaseintrittstemperatur nicht mehr ausreichend niedrig gehalten werden kann, wird zur zusätzlichen Maßnahme der Flüssigkeitszugabe bzw. der Reduktionsmittelzugabe gegriffen.

In weiterer Ausgestaltung des Verfahrens wird bei Zugabe von flüssigem Reduktionsmittel für die Zugabemenge des Reduktionsmittels eine durch die Konzentration einer Abgaskomponente stromab des Abgaskatalysators bestimmte Obergrenze vorgegeben. Dadurch wird eine unzulässig hohe Schadstoffkonzentration, welche sich aus der Zugabe von zusätzlichem Reduktionsmittel ergeben kann, vermieden. Für den vorrangig aus der Reduktionsmittelzugabe resultierenden Schadstoff kann ein entsprechender Abgassensor stromabwärts des Abgaskatalysators vorgesehen sein, dessen Signal für die Begrenzung der Reduktionsmittelzugabe ausgewertet wird. Zweckmäßig sind eine Lambdasonde und/oder ein Ammoniaksensor.

Vorteilhafte Ausführungsformen der Erfindung sind in den Zeichnungen veranschaulicht und werden nachfolgend beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Es zeigen:
Fig. 1 eine schematische Darstellung einer ersten Ausführungsform einer Abgasreinigungseinrichtung und
Fig. 2 eine schematische Darstellung einer zweiten Ausführungsform einer Abgasreinigungseinrichtung.

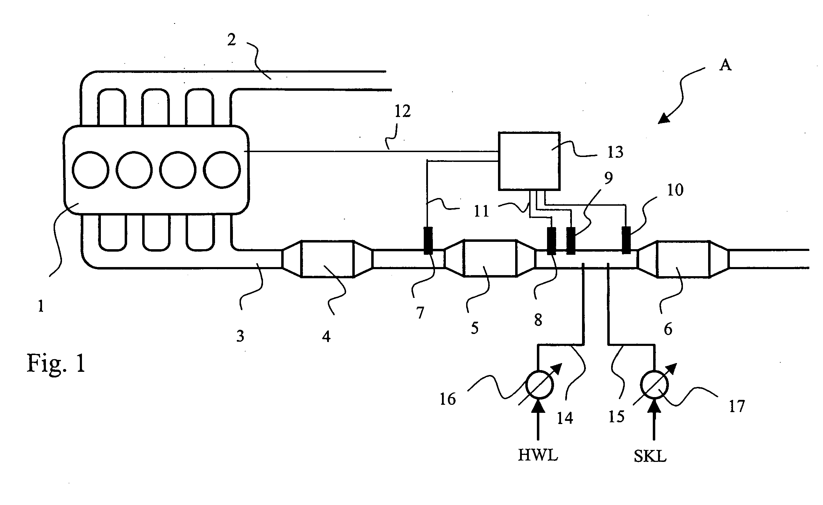

Die in Fig. 1 schematisch dargestellte erste bevorzugte Ausführungsform einer Abgasreinigungseinrichtung A ist an eine Brennkraftmaschine 1 eines nicht dargestellten Kraftfahrzeugs angeschlossen. Die Brennkraftmaschine 1 erhält Verbrennungsluft über eine Ansaugluftleitung 2. Die Verbrennungsabgase werden über eine Abgasleitung 3 abgeführt. In der Abgasleitung 3 sind als Abgasreinigungskomponenten hintereinander ein Oxidationskatalysator 4, ein Partikelfilter 5 und ein SCR-Katalysator 6 angeordnet. Die Brennkraftmaschine ist vorzugsweise als Dieselmotor ausgebildet. Als Kraftfahrzeug kommt insbesondere ein Nutzfahrzeug in Betracht.

Zur Erfassung des Beladungszustands des Partikelfilters 5 sind ein erster Drucksensor 7 und ein zweiter Drucksensor 8 eingangsseitig bzw. ausgangsseitig des Partikelfilters 5 in der Abgasleitung 3 vorgesehen. Weiter sind ein erster Temperatursensor 9 sowie ein zweiter Temperatursensor 10 in der Abgasleitung 3 zwischen dem Partikelfilter 5 und dem nachgeschalteten SCR-Katalysator 6 vorgesehen. Die Signale der Sensoren 7, 8, 9, 10 werden über Signalleitungen 11 an ein elektronisches Steuergerät 13 geleitet, welches in Abhängigkeit der Signale den Betrieb des Motors 1 und der Abgasreinigungseinrichtung A steuert. Stellvertretend für die hierfür vorhandenen Steuerleitungen ist eine Motorsteuerleitung 12 zur Ansteuerung des Motorbetriebs eingezeichnet.

In den Abschnitt der Abgasleitung 3 zwischen den Temperatursensoren 9, 10 münden eine erste Zugabeleitung 14 für eine Harnstoff-Wasserlösung (HWL) und eine zweite Zugabeleitung 15 für Sekundärluft (SKL). Zur Einstellung der Zugabemenge der Harnstoff-Wasserlösung ist eine HWL-Dosiereinheit 16 vorgesehen, während die Zugabemenge der Sekundärluft von einer SKL-Dosiereinheit 17 eingestellt wird. Die zu dosierende Harnstoff-Wasserlösung wird einem nicht dargestellten Vorratsbehälter entnommen, wozu eine ebenfalls nicht näher dargestellte Fördereinheit vorgesehen ist. Für die in das Abgas einzuspeisende Sekundärluft kann ein Druckluftspeicher oder eine Fördereinheit wie ein Gebläse oder ein Kompressor vorgesehen sein, was im Einzelnen nicht näher dargestellt ist.

Nachfolgend wird ein bevorzugtes Verfahren zum Betreiben der in Fig. 1 dargestellten Abgasreinigungseinrichtung A näher erläutert.

Bei normalem Betrieb des Motors 1 werden oxidierbare schädliche Abgasbestandteile wie Kohlenmonoxid oder Kohlenwasserstoffe durch den Oxidationskatalystor 4 aus dem Abgas entfernt. Ferner erfolgt eine Reinigung der Abgase durch Ausfilterung der Rußpartikel durch den Partikelfilter 5. Im Abgas enthaltene Stickoxide werden mit Hilfe des SCR-Katalysators 6 reduziert, wozu dem Abgas über die Zugabeleitung 14 eine vom Steuergerät 13 ermittelte Menge an Harnstoff-Wasserlösung bedarfsgerecht und über die HWL-Dosiereinheit 16 dosiert zugeführt wird. Dabei dient der Harnstoff bzw. aus dem Harnstoff freigesetzter Ammoniak als selektives Reduktionsmittel zur reduktiven Umsetzung der Stickoxide. Die katalytische Umsetzung der Stickoxide am SCR-Katalysator 6 wird dabei durch die Bereitstellung eines erhöhten Stickstoffdioxidanteils verbessert, was durch Oxidation von Stickstoffmonoxid mittels des Oxidationskatalysators 4 erreicht wird. Das vom Oxidationskatalysator 4 aus Stickstoffmonoxid erzeugte Stickstoffdioxid bewirkt zusätzlich eine oxidative Umsetzung von im Partikelfilter 5 abgelagerten Rußpartikeln. Dennoch tritt im allgemeinen eine allmählich zunehmende Rußbeladung des Partikelfilters 5 ein, so dass dieser in zunehmenden Maß verstopft und von Zeit zu Zeit eine Partikelfilterregeneration durch thermischen Rußabbrand erforderlich wird.

Die Notwendigkeit einer Partikelfilterregeneration durch thermischen Rußabbrand wird mittels der Drucksensoren 7, 8 festgestellt. Mit diesen wird der Strömungswiderstand des Partikelfilters 5 überwacht. Durch Auswertung der entsprechenden Signale wird vom Steuergerät 13 der Rußbeladungszustand des Partikelfilters 5 laufend ermittelt. Wird eine kritische Beladung festgestellt, so wird, sobald ein hierfür geeigneter und vom Steuergerät 13 als zulässig erkannter Motorbetriebszustand vorliegt, die Regeneration des Partikelfilters 5 durch thermischen Rußabbrand eingeleitet. Hierzu wird vom Steuergerät 13 der Motorbetrieb derart umgestellt, dass sich eine erhöhte Temperatur des in den Partikelfilter 5 einströmenden Abgases ergibt. Vorzugsweise wird eine Abgastemperatur von etwa 650 °C eingestellt. Hierzu können an sich bekannte Maßnahmen wie Ansaugluftdrosselung, späte Kraftstoffnacheinspritzung und dergleichen ergriffen werden.

Obschon die Einstellung der für die Partikelfilterregeneration notwendigen Bedingungen vom Steuergerät 13 durch entsprechende Steuermechanismen kontrolliert durchgeführt wird, besteht die Gefahr, dass sich kritische Betriebszustände insbesondere hinsichtlich einer Überhitzung des Partikelfilters 5 und/oder des nachgeschalteten SCR-Katalysators 6 ergeben. Diese können beispielsweise aus einem beschleunigten Rußabbrand mit entsprechend erhöhter Wärmefreisetzung, insbesondere bei einem abrupten Rückgang des Abgasdurchsatzes, resultieren. Es ist daher von besonderer Bedeutung, dass die Überschreitung einer materialbedingten Schädigungstemperatur des Partikelfilters 5 bzw. des SCR-Katalysators 6 zuverlässig vermieden wird.

Nachfolgend wird zunächst auf erfindungsgemäße Maßnahmen zur Vermeidung einer Überhitzung des SCR-Katalysators 6 eingegangen.

Die Temperatur des aus dem Partikelfilter 5 austretenden Abgases bzw. des in den SCR-Katalysator 6 eintretenden Abgases wird vom Steuergerät 13 durch Auswertung der Signale der Temperatursensoren 9, 10 ermittelt. Wird festgestellt, dass eine der Temperaturen, insbesondere die vom Temperatursensor 10 erfasste Abgaseintrittstemperatur eine vorgebbare Grenze im Bereich von vorzugsweise 550 °C bis 600 °C überschreitet, so wird zur Abkühlung des Abgases die Zufuhr von Sekundärluft über die Zugabeleitung 15 und/oder die Zufuhr von Harnstoff-Wasserlösung über die Zufuhrleitung 14 in das Abgas aktiviert. Hierbei kann wie folgt verfahren werden.

In einer ersten Verfahrensvariante erfolgt eine Kühlung des Abgases durch Zugabe von Sekundärluft. Dabei erfolgt über die SKL-Dosiereinheit 17 eine Einstellung der Sekundärluftzugabemenge nach Auswertung der Signale der Temperatursensoren 9, 10. Diese Einstellung kann durch eine Regelung mit der vom zweiten Temperatursensor 10 erfassten Abgastemperatur als Regelgröße durchgeführt werden. Vorzugsweise wird eine geregelte Einstellung der Sekundärluftzugabemenge derart vorgenommen, dass die vorgegebene Temperaturgrenze nicht überschritten wird. Es ist jedoch gleichfalls möglich, dass die Sekundärluftzugabemenge vom Steuergerät 13 rechnerisch ermittelt und über die SKL-Dosiereinheit 17 entsprechend eingestellt wird. Hierzu wertet das Steuergerät 13 die vom Temperatursensor 9 oder vom Temperatursensor 10 erfasste Temperatur aus. Die Sekundärluftzugabemenge ergibt sich dabei beispielsweise durch eine Mischungsrechnung aus dieser Temperatur, der angestrebten Temperaturabsenkung und aus dem aktuellen Abgasmassenstrom, deren Werte dem Steuergerät 13 zur Verfügung stehen. Falls die Sekundärluft von einem Gebläse oder einem Kompressor vorgenommen wird, kann die Einstellung der Sekundärluftzugabemenge über die Drehzahl des entsprechenden Bauteils erfolgen. Bei Entnahme aus einem Druckspeicher kann ein ansteuerbares Ventil vorgesehen sein. Die jeweils vorgesehene Einstellmöglichkeit wird hierbei in Fig. 1 beispielhaft durch die SKL-Dosiereinheit 17 verkörpert. Zur weiteren Verbesserung der Einstellgenauigkeit der Sekundärluftzugabemenge kann eine Messung der Sekundärlufttemperatur und/oder der Sekundärluftzugabemenge beispielsweise mittels eines Thermoelements bzw. mittels einer Messblende vorgesehen sein.

An Stelle einer Sekundärluftzugabe kann in einer zweiten Verfahrensvariante zur Kühlung des Abgases Harnstoff-Wasserlösung in das Abgas zwischen dem Partikelfilter 5 und dem SCR-Katalysator 6 in die Abgasleitung 3 eingebracht werden, wobei auf Einrichtungen zur Sekundärluftzugabe verzichtet werden kann. Die erforderliche Zugabemenge der Harnstoff-Wasserlösung wird vorzugsweise analog zur oben angegebenen Vorgehensweise unter Berücksichtigung der mittels der Sensoren 9, 10 erfassten Abgastemperaturen ermittelt und dann von der Dosiereinheit 16 eingestellt. Die dem Abgas zur Verdunstung des Lösungsmittels Wasser entzogene Wärme bewirkt eine besonders wirksame Abkühlung des Abgases. Darüber hinaus bleibt die Stickoxid-Verminderungsfunktion des SCR-Katalysators 6 erhalten, so dass gleichzeitig eine Entstickung des Abgases erfolgt. Allerdings besteht im Falle einer stark erhöhten Zugabe von Harnstoff-Wasserlösung die Gefahr einer unzulässigen Sekundäremission von Ammoniak oder von Stickoxid, welches durch Oxidation von überschüssigem Harnstoff bzw. Ammoniak gebildet werden kann. Um dies zu vermeiden, kann vorgesehen sein mittels eines in Fig. 1 nicht dargestellten Abgassensors ausgangsseitig des SCR-Katalysators 6 die Konzentration von Ammoniak und/oder von Stickoxid zu erfassen. Die Zugabemenge der Harnstoff-Wasserlösung wird dann vorzugsweise derart begrenzt, dass eine vorgebbare Maximalemission der genannten Schadstoffe unterschritten wird.

In einer weiteren Verfahrensvariante kann vorgesehen sein, gegebenenfalls gleichzeitig durch Sekundärluftzugabe und durch Zugabe von Harnstoff-Wasserlösung eine Kühlung des Abgases vorzunehmen. Hierzu kann vorgesehen sein, zur Einhaltung einer vorgebbaren ersten Grenztemperatur an der Stelle des zweiten Temperatursensors 10 zunächst dem Abgas Sekundärluft bis zum Erreichen einer vorgebbaren Maximalmenge zuzugeben. Reicht dies nicht zur Einhaltung der Grenztemperatur aus, wird zusätzlich Harnstoff-Wasserlösung zugegeben. Dabei kann vorgesehen sein, die Zugabe der Harnstoff-Wasserlösung zu aktivieren, wenn eine zweite, höhere Grenztemperatur überschritten wird. Die erste und/oder die zweite Grenztemperatur können dabei auch durch den ersten Temperatursensor 9 vorgegeben sein.

In analoger Weise kann in einer weiteren Verfahrensvariante vorgesehen sein, zur Absenkung der Abgastemperatur eingangsseitig des SCR-Katalysators 6 zunächst Harnstoff-Wasserlösung zuzugeben. Wird trotz Abgabe einer vorgebbaren Höchstmenge an Harnstoff-Wasserlösung nicht die angestrebte Temperaturabsenkung erreicht, so wird zusätzlich Sekundärluft zugeführt.

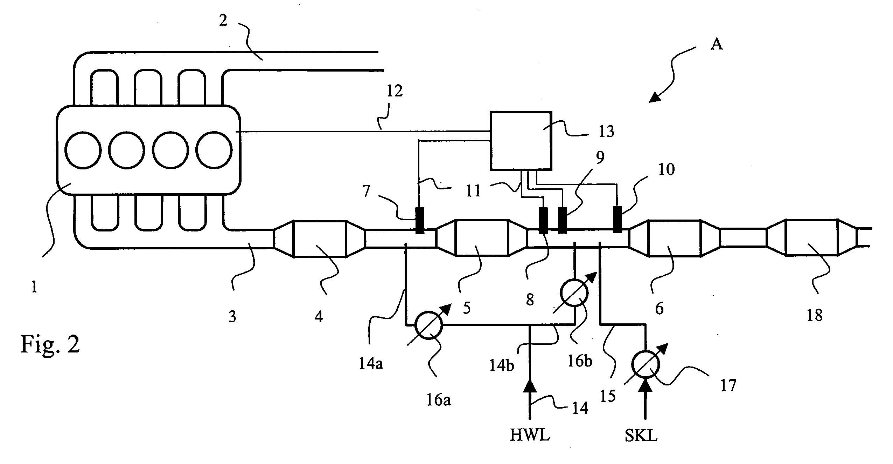

Nachfolgend wird auf weitere erfindungsgemäße Maßnahmen eingegangen, welche zusätzlich der Vermeidung einer Überhitzung des Partikelfilters 5 dienen. Hierzu ist eine zusätzliche zweite Zugabemöglichkeit von Harnstoff-Wasserlösung eingangsseitig des Partikelfilters 5 vorgesehen. Die enstprechend modifizierte Abgasreinigungseinrichtung ist in Fig. 2 dargestellt, wobei die entsprechenden Bauteile, soweit sie mit den Teilen der Fig. 1 übereinstimmen, durch dieselben Bezugszeichen gekennzeichnet sind. Die in Fig. 2 dargestellte Abgasreinigungseinrichtung A ist ähnlich aufgebaut wie die der Fig. 1, weshalb nachfolgend lediglich auf die Unterschiede eingegangen wird.

Die Abgasreinigungseinrichtung A gemäß Fig. 2 umfasst zusätzlich einen zweiten Oxidationskatalysator 18, der dem SCR-Katalysator 6 nachgeschaltet ist. Ausgangsseitig des SCR-Katalysators 6 kann ein unerwünschter Ammoniakgehalt im Abgas beispielsweise durch Ammoniakschlupf von im SCR-Katalysator 6 gespeicherten Ammoniak insbesondere bei plötzlicher Temperaturerhöhung oder Abgasdurchsatzerhöhung auftreten. Weiter kann ein unerwünschter Gehalt an Ammoniak im Abgas auftreten, wenn wie oben beschrieben zu Kühlungszwecken eine erhöhte Menge an Harnstoff-Wasserlösung dem Abgas zugegeben wird. Durch den zweiten Oxidationskatalysator 18 werden diese Ammoniakemissionen vermieden, da Ammoniak im zweiten Oxidationskatalysator 18 oxidiert wird.

Die Abgasreinigungseinrichtung A gemäß Fig. 2 unerscheidet sich von der der Fig. 1 außerdem durch eine weitere Zugabemöglichkeit von Harnstoff-Wasserlösung, welche eingangsseitig des Partikelfilters 5 vorgesehen ist. Hierfür verzweigt sich die HWL-Zugabeleitung 14 in einen ersten Zweig 14a, welcher in den Abgasleitungsabschnitt zwischen dem ersten Oxidationskatalysator 4 und dem Partikelfilter 5 in die Abgasleitung 3 mündet. Ein zweiter Zweig 14b mündet wie bei der in Fig. 1 dargestellten Abgasreinigungseinrichtung A in den Abgasleitungsabschnitt zwischen dem Partikelfilter 5 und dem SCR-Katalysator 6. Dabei ist sowohl für den ersten Zweig 14a als auch für den zweiten Zweig 14b je eine HWL-Dosiereinheit 16a bzw. 16b vorgesehen, welche getrennt angesteuert werden können.

Mittels Zugabe von Harnstoff-Wasserslösung über den ersten HWL-Zugabezweig 14a lassen sich in vorteilhafter Weise schädliche Temperaturspitzen, wie sie beim thermischen Rußabbrand im Partikelfilter 5 auftreten können, vermeiden. Hierzu wird vorzugsweise wie folgt vorgegangen. Die Temperatur des aus dem Partikelfilter 5 austretenden Abgases wird wie bereits beschrieben vom ersten Temperatursensor 9 erfasst und vom Steuergerät 13 überwacht. Wird ein vorgebbare Grenztemperatur überschritten, so wird dem Abgas über den ersten HWL-Zugabezweig 14a Harnstoff-Wasserlösung zugegeben. Dabei erfolgt vorzugsweise eine Einstellung der Zugabemenge derart, dass die Austrittstemperatur des Abgases aus dem Partikelfilter 5 unter die vorgebbaren Grenztemperatur abgesenkt wird. Es kann auch eine Einregelung auf eine vorgebbare Solltemperatur an der Stelle des ersten Temperatursensors 9 erfolgen. Auf diese Weise lässt sich die Temperatur im Partikelfilter 5 sicher unter der Schädigungsgrenze halten bzw. die Rußabbrandgeschwindigkeit im Partikelfilter 5 kontrollieren.

Unter ungünstigen Umständen besteht die Gefahr, dass im Partikelfilter 5 ein sehr rascher Anstieg der Rußabbrandgeschwindigkeit eintritt. Dies kann zu lokalen Überhitzungen im Partikelfilter 5 mit entsprechenden Schädigungen wie beispielsweise Anschmelzungen führen. Erfindungsgemäß wird dies erkannt, indem der zeitliche Temperaturgradient der mittels des ersten Temperatursensors 9 erfassten Abgastemperatur vom Steuergerät 13 ermittelt wird. Erfindungsgemäß wird beim Überschreiten einer vorgebbaren maximalen Anstiegsgeschwindigkeit der Abgastemperatur austrittsseitig des Partikelfilters 5 die Zugabe von Harnstoff-Wasserlösung über den ersten HWL-Zugabeleitungszweig 14a aktiviert. Dadurch wird die Eintrittstemperatur des Abgases in den Partikelfilter 5 und damit die Rußabbrandgeschwindigkeit abgesenkt. Dabei kann eine Einstellung der Zugabemenge an Harnstoff-Wasserlösung in Abhängigkeit von der Anstiegsgeschwindigkeit der Abgastemperatur vorgesehen sein.

Eine an die absolute Höhe der ausgangsseitig des Partikelfilters 5 gemessenen Temperatur geknüpfte Zugabe von Harnstoff-Wasserlösung über den ersten HWL-Zugabeleitungszweig 14a bzw. über den zweiten HWL-Zugabeleitungszweig 14b kann zusätzlich vorgesehen sein. Ebenso ist es vorteilhaft, wie oben beschrieben gegebenenfalls zusätzlich eine Kühlung des in den SCR-Katalysator 6 eintretenden Abgases durch Zugabe von Sekundärluft vorzunehmen. Es versteht sich ferner, dass die für den Normalbetrieb vorgesehen Dosierung von Harnstoff-Wasserlösung zum Zwecke der Stickoxidminderung mittels des SCR-Katalysators auch im Falle einer Partikelfilterregeneration durchgeführt wird.

## Patentansprüche

1. Verfahren zum Betreiben einer Abgasreinigungseinrichtung
(A) einer Brennkraftmaschine (1) insbesondere eines Kraftfahrzeugs, mit
- einem in einer Abgasleitung (3) der Brennkraftmaschine (1) angeordneten Partikelfilter (5), für den von Zeit zu Zeit Regenerationsvorgänge mit einem thermischen Rußabbrand vorgesehen sind und
- einem dem Partikelfilter (5) nachgeschalteten Abgaskatalysator (6), mit folgenden Verfahrensschritten:
- Durchführen einer Regeneration des Partikelfilters (5) durch Rußabbrand,
- Ermitteln einer Abgastemperatur zwischen dem Partikelfilter (5) und dem Abgaskatalysator (6),
- Zugabe eines kühlenden Fluids in die Abgasleitung (3), wenn die Abgastemperatur zwischen dem Partikelfilter (5) und dem Abgaskatalysator (6) eine insbesondere erste vorgebbare Grenztemperatur und/oder eine vorgebbare maximale Anstiegsgeschwindigkeit überschreitet.

2. Verfahren nach Anspruch 1,
**dadurch gekennzeichnet,**
**dass** die Zugabe des kühlenden Fluids in die Abgasleitung (3) eingangsseitig des Partikelfilters (5) und/oder zwischen dem Partikelfilter (5) und dem Abgaskatalysator (6) erfolgt.

3. Verfahren nach Anspruch 1 oder 2,
**dadurch gekennzeichnet,**
**dass** die Zugabemenge des kühlenden Fluids wenigstens in Abhängigkeit von der Abgastemperatur zwischen dem Partikelfilter (5) und dem Abgaskatalysator (6) eingestellt wird.

4. Verfahren nach einem der Ansprüche 1 bis 3,
**dadurch gekennzeichnet,**
**dass** als kühlendes Fluid Sekundärluft und/oder eine Flüssigkeit zugegeben wird.

5. Verfahren nach Anspruch 4,
**dadurch gekennzeichnet,**
**dass** eine Zugabe von Flüssigkeit erfolgt, wenn die Abgastemperatur zwischen dem Partikelfilter (5) und dem Abgaskatalysator (6) die erste vorgebbare Grenztemperatur überschreitet und die Sekundärluftzugabe zugeschaltet wird, wenn die Abgastemperatur eine im Vergleich zur ersten Grenztemperatur höhere vorgebbare zweite Grenztemperatur überschreitet.

6. Verfahren nach Anspruch 4,
**dadurch gekennzeichnet,**
**dass** eine Zugabe von Sekundärluft erfolgt, wenn die Abgastemperatur zwischen dem Partikelfilter (5) und dem Abgaskatalysator (6) die erste vorgebbare Grenztemperatur überschreitet und die Flüssigkeitszugabe zugeschaltet wird, wenn die Abgastemperatur eine im Vergleich zur ersten Grenztemperatur höhere vorgebbare zweite Grenztemperatur überschreitet.

7. Verfahren nach einem der Ansprüche 4 bis 6,
**dadurch gekennzeichnet,**
**dass** bei Zugabe von flüssigem Reduktionsmittel für die Zugabemenge des Reduktionsmittels eine durch die Konzentration einer Abgaskomponente stromab des Abgaskatalysators (6) bestimmte Obergrenze vorgegeben wird.
